# EUROPEAN PATENT SPECIFICATION

(11) **EP 2 275 301 B1**
(45) Date of publication and mention of the grant of the patent: **30.01.2013**
(21) Application number: 09251822.4
(22) Date of filing: 17.07.2009
(51) Int. Cl.: H02P 25/02, H02P 25/10, H02P 29/00, B60L 15/20

(54) **Electric motor drive system with bi-directional variable-speed input and constant directional output**
Elektrisches Motorantriebssystem mit bidirektionaler variabler Drehzahleingabe und konstanter direktionaler Ausgabe
Système de commande de moteur électrique doté d'une entrée bidirectionnelle à vitesse variable et d'une sortie directionnelle constante

(43) Date of publication of application: 19.01.2011
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A- 0 724 977
- CN-Y- 200 997 546
- US-A1- 2007 113 703

## Description

### BACKGROUND OF THE INVENTION

### (a) Field of the invention

The present invention discloses an electric motor being able to be driven by electric power from the power source through the electric motor operative control device to do bi-directional rotation of positive or reverse rotation for driving the input end of the constant directional output transmission device and further through the output end of the constant directional output transmission device to provide constant directional rotation output of different speed change ratio in different directions of driving inputs via the constant directional output transmission device with different speed change ratio for driving the loading wheel trains; wherein the present invention can be applied in electric motor driven carriers such as electric bicycles, electric motorcycles, electric vehicles, or electric driven industry machinery.

### (b) Description of the Prior Art

For the speed change output of the conventional electric motor drive system, except for controlling the electric motor to change speed, it usually has to be achieved by CVT or gear shift, which has drawbacks of complicated structures, high costs and low transmission efficiency.

EP0724977 discloses a parallel hybrid drive for a motor vehicle, in which a continuously variable transmission is used in such a way as to eliminate the need for the low speed gear or gears used for moving off from rest using the electric motor, and therefore the clutch is only used for those gears which are used while driving with the internal combustion engine.

US20070113703 discloses a gear and clutch cluster featuring a bi-directional input and one-directional output designed to improve the lubrication of transmission systems when using forward and reverse gears.

### SUMMARY OF THE INVENTION

The present invention discloses an electric motor drive system according to claim 1 with a bi-directional input and a constant directional output, the system comprising: an electric motor capable of bi-directional, variable-speed rotation, in a forwards direction or in a reverse direction; a control device for controlling the rotational direction and rotational speed of the electric motor; a constant directional output transmission device in drivable engagement with the output of the electric motor; and a load in drivable engagement with the output end of the constant directional output transmission device; and a transmission device between 1) the constant directional output transmission device and the load, or 2) between the electric motor and the constant directional output transmission device, or 3) between the electric motor and the constant directional output transmission device as well as between the constant directional output transmission device and the load, wherein the constant directional output transmission device is such as to accept the variable rotational speed and direction output from the electric motor and provide a constant directional rotational output at a variable or constant speed ratio; and wherein the rotational speed of the output from the constant directional output transmission device is capable of being different to the rotational speed of the input from the electric motor.

### BRIEF DESCRIPTION OF THE DRAWINGS

Fig. 1 is a basic block schematic view of the electric motor drive system of the present invention with bi-directional input and constant directional output.
Fig. 2 is a block schematic view showing that the drive system in Fig. 1 is additionally installed with a transmission device (104) between the electric motor (101) and the constant directional output transmission device (102).
Fig. 3 is a block schematic view showing that the drive system in Fig. 1 is additionally installed with a transmission device (104) between the constant directional output transmission device (102) and the driven loading wheel train (103).
Fig. 4 is a block schematic view showing that the drive system in Fig. 1 is additionally installed with a transmission device (104) between the electric motor (101) and the constant directional output transmission device (102) as well as between the constant directional output transmission device (102) and the driven loading wheel train (103).
Fig. 5 is a basic block schematic view of the electric motor drive system with bi-directional input and constant directional output of the present invention being installed with an electric motor loading currents detection device.
Fig. 6 is a block schematic view showing that the drive system in Fig. 5 is additionally installed with a transmission device (104) between the electric motor (101) and the constant directional output transmission device (102).
Fig. 7 is a block schematic view showing that the drive system in Fig. 5 is additionally installed with a transmission device (104) between the constant directional output transmission device (102) and the driven loading wheel train (103).
Fig. 8 is a block schematic view showing that the drive system in Fig. 5 is additionally installed with a transmission device (104) between the electric motor (101) and the constant directional output transmission device (102) as well as between the constant directional output transmission device (102) and the driven loading wheel train (103).

### DESCRIPTION OF MAIN COMPONENT SYMBOLS

100: Power supply device
101: Electric motor
102: Constant directional output transmission device
103: Loading wheel train
104, 200: Transmission device
109: Electric motor loading currents detection device
110: Electric motor operative control device
111: Input device

### DETAILED DESCRIPTION OF THE PREFERRED EMBODIMENTS

The present invention discloses a drive system being able to do bi-directional rotation of positive or reverse rotation by electric motor for driving input end of the constant directional output transmission device and further through the output end of the constant directional output transmission device to provide constant directional rotation output of different speed change ratio in different directions of driving inputs via the constant directional output transmission device of different speed change ratio for driving the loading wheel trains, wherein the present invention can be applied in electric motor driven carriers such as electric bicycles, electric motorcycles, electric vehicles, or electric driven industry machinery.

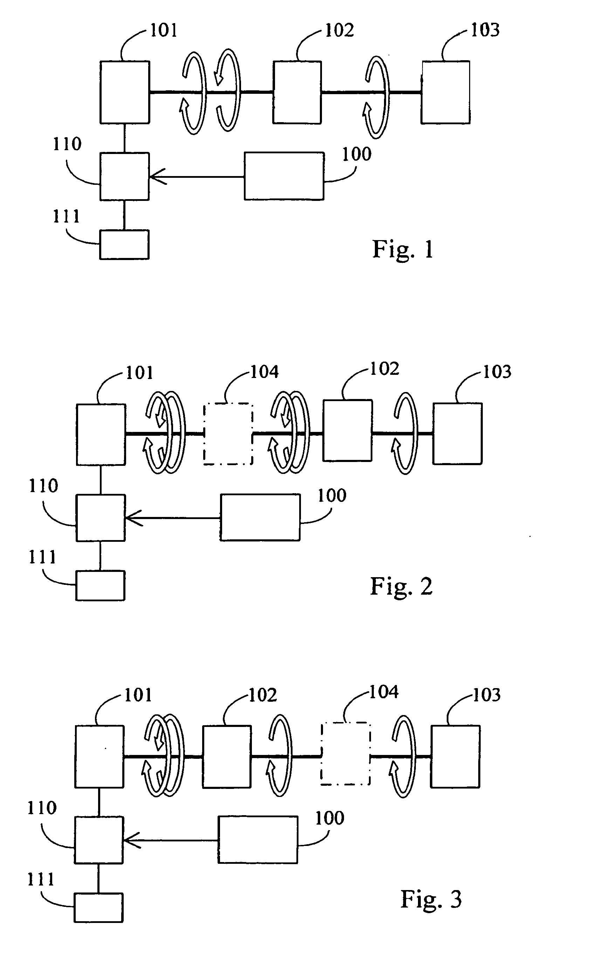

Fig. 1 is a basic block schematic view of the electric motor drive system of the present invention with bi-directional input and constant directional output.
Fig. 2 is a block schematic view showing that the drive system in Fig. 1 is additionally installed with a transmission device (104) between the electric motor (101) and the constant directional output transmission device (102).
Fig. 3 is a block schematic view showing that the drive system in Fig. 1 is additionally installed with a transmission device (104) between the constant directional output transmission device (102) and the driven loading wheel train (103).

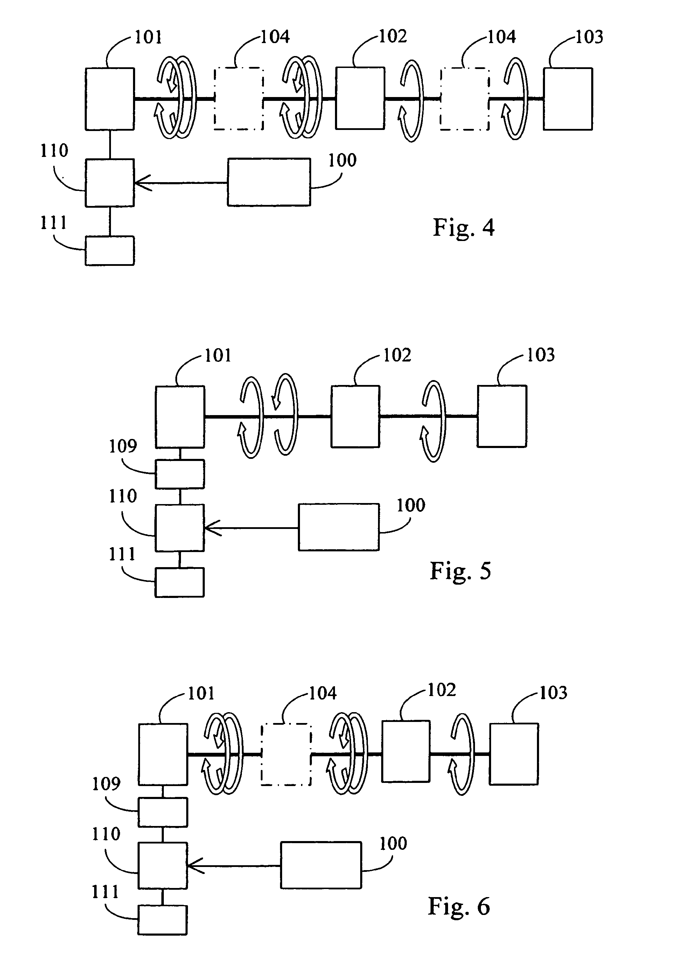

Fig. 4 is a block schematic view showing that the drive system in Fig. 1 is additionally installed with a transmission device (104) between the electric motor (101) and the constant directional output transmission device (102) as well as between the constant directional output transmission device (102) and the driven loading wheel train (103).

As shown in the Figs. 1∼4, for the electric motor drive system with bi-directional input and constant directional output, the electric power from the power supply device (100) is subject to the operative signal or commands of the input device (111) via the electric motor operative control device (110) to drive the electric motor (101) in the first driven rotational direction or in the second driven rotational direction of contrary rotational direction, wherein the rotational kinetic energy output from the output end of the electric motor (101) is directly or through the transmission device (104) provided to the input end of the constant directional output transmission device (102), thereby by means of the constant directional output transmission device of different speed change ratio to output the rotational kinetic energy in constant rotational direction of different speed change ratio in different directions of driving inputs, andfurther to drive the loading wheel train (103) as shown in Fig. 1∼Fig. 4, wherein:

The electric motor (101): It is comprised of AC or DC, brushless or brushed, synchronous or asynchronous operated electric power driven electric motor, and can be operated in both positive direction and reverse direction;

Electric motor operative control device (110): it is constituted by dynamo-electric components or devices, or solid state electronic components or device, or the control circuits having microprocessor and associate operative software for inputting AC or DC power from the utility power source or the generator, or inputting electric power from the power supply device (100) such as fuel battery, primary battery, or charge/discharge secondary battery, thereby to operatively control the on/off, rotational direction, rotational speed, torque to the electric motor (101), or provide over-voltage or over-currents protection to the electric motor (101);

Input device (111): it issues signals or commands to the electric motor operative control device (110) for operatively controlling or setting the on/off, rotational direction, rotational speed, torque to the electric motor (101);

The input kinetic energy of the first driven rotational direction and the second driven rotational direction from the electric motor (101) is for driving the input end of the constant directional output transmission device (102);

The first driven rotational direction is contrary to the second driven rotational direction;

The constant directional output transmission device (102): The constant directional output transmission device (102) directly receives or is through the transmission device (104) to receive kinetic energy in different rotational direction from the electric motor (101) so as to provide kinetic energy output in constant rotational direction; wherein the internal transmission components of the constant directional output transmission device (102) are constituted by one or more than one transmission components of the 1) gear train; or 2) friction wheel train; or 3) chain and chain sprocket train; or 4) belt and belt wheel train; or 5) transmission crankshaft and wheel train; or 6) fluid transmission device; or 7) electromagnetic transmission device, etc., wherein if the constant directional output transmission device (102) is driven by the inputs of the first driven rotational direction and the second driven rotational direction in different rotational directions, the speed ratio of the constant directional rotation between the one at the input end and the one at the output end is the same or different or a variable speed ratio;

The loading wheel train (103): It is the wheel train type load being directly driven by the constant directional output transmission device (102) or being driven in the single constant directional rotation via the transmission device (104).

The electric motor drive system with bi-directional input and constant directional output of the present invention can be further installed with a transmission device between the constant directional output transmission device (102) and the loading wheel train (103), or between the electric motor (101) and the constant directional output transmission device (102), or between the electric motor (101) and the constant directional output transmission device (102) as well as between the constant directional output transmission device (102) and the loading wheel train (103);

Fig. 2 is a block schematic view showing that the drive system in Fig. 1 is additionally installed with a transmission device (104) between the electric motor (101) and the constant directional output transmission device (102).

Fig. 3 is a block schematic view showing that the drive system in Fig. 1 is additionally installed with a transmission device (104) between the constant directional output transmission device (102) and the driven loading wheel train (103).

Fig. 4 is a block schematic view showing that the drive system in Fig. 1 is additionally installed with a transmission device (104) between the electric motor (101) and the constant directional output transmission device (102) as well as between the constant directional output transmission device (102) and the driven loading wheel train (103).

The transmission device (104): The transmission device (104) is constituted by one or more than one transmission devices of the following: 1) various gear-type, belt-type, friction-type fixed speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning structure.

For the electric motor drive system with bi-directional input and constant directional output of the present invention, the input device (111) is manually operated to through the electric motor operative control device (110) operatively control the rotational direction of the electric motor (101).

In addition, the electric motor drive system with bi-directional input and constant directional output of the present invention can be additional installed with an electric motor loading currents detection device (109), thereby to automatically switch the output speed ratio according to the loading currents;

Fig. 5 is a basic block schematic view of the electric motor drive system with bi-directional input and constant directional output of the present invention being installed with an electric motor loading currents detection device.

Fig. 6 is a block schematic view showing that the drive system in Fig. 5 is additionally installed with a transmission device (104) between the electric motor (101) and the constant directional output transmission device (102).

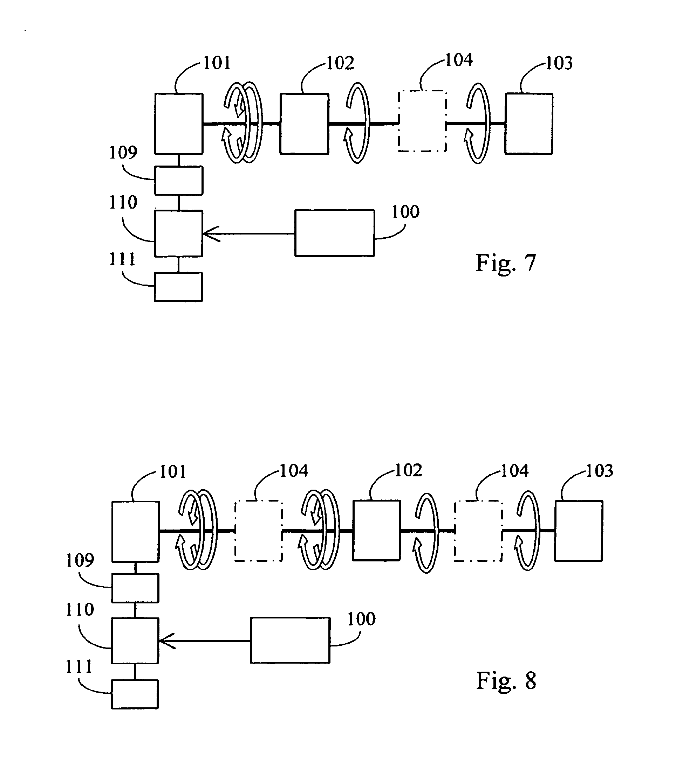

Fig. 7 is a block schematic view showing that the drive system in Fig. 5 is additionally installed with a transmission device (104) between the constant directional output transmission device (102) and the driven loading wheel train (103).

Fig. 8 is a block schematic view showing that the drive system in Fig. 5 is additionally installed with a transmission device (104) between the electric motor (101) and the constant directional output transmission device (102) as well as between the constant directional output transmission device (102) and the driven loading wheel train (103).

As shown in aforementioned Figs. 5∼8, the electric motor drive system with bi-directional input and constant directional output of the present invention is further installed with an electric motor loading currents detection device (109), wherein the electric motor loading currents detection device (109) can be comprised of various buck/step down type current detection device, or electromagnetic effect induction type current detection device, or magnetic detecting type current detection device, or heat accumulated type current detection device for detecting loading currents of the electric motor (101), thereby feedback to the electric motor operative control device (110), wherein when the loading currents of the electric motor exceeds the predetermined value and the status exceeds the preset time, the signals from the electric motor loading currents detection device (109) is transmitted to the input device (111) or the electric motor operative control device (110) so as to change the rotational direction of the electric motor (101) and further change the speed ratio of the constant directional output transmission device (102) to a relatively enlarged deduction ratio to increase the output in the same rotational direction of the output rotational torque to further drive the load.

When the loading currents of the electric motor (101) return and drop below the predetermined value, the following two methods can be operated to make the electric motor back to the normal status, including:
1) By manually control the input device (111) to operatively control the electric motor operative control device (110) to enable the electric motor (101) returning to the original rotational direction, thereby driving the load at original speed ratio; or
2) When the electric motor loading currents detection device (109) detects currents dropping to the predetermined value, by means of the electric motor operative control device (110) to automatically select the rotational speed which is not only capable of driving the load at that time, but also capable of outputting corresponding power volume according to the variation of the speed ratio so as to drive the load fluently without pauses or unexpected accelerations, thereby to drive the electric motor (101) being fluently operated in the original rotational direction.

If the electric motor drive system with bi-directional input and constant directional output of the present invention further requires to perform constant directional output in different driving directions, it can be achieved by one of following methods:
1) By means of the electric motor operative control device (110) to operatively control the initial driving direction of the electric motor (101); or
2) A motor direction switch is additionally installed to manually switch the initial rotational direction of the motor; or
3) One of the transmission devices (104) is constituted by the transmission device with functions of mechanically switching rotational directions of the output and changing the speed ratio for switching the rotational direction of output.

### BACKGROUND OF THE INVENTION

### (a) Field of the invention

The present invention is through the power of the power source to drive the bidirectional unequal speed electric motor for bidirectional positive or reverse rotation via bidirectional unequal speed electric motor operative control device to further drive the input end of bidirectional same or different speed change ratio constant directional output transmission device and it is further through the output end of the bidirectional same or different speed change ratio constant directional output transmission device to operate the different speed change ratio constant directional rotating output while in different driving input direction to drive the rotating load, wherein the present invention can be applied in the bidirectional unequal speed electric motor driven carriers such as electric bicycles, electric motorcycles, or electric vehicles, or electric industrial machineries, tool machineries, or various electric tools or other electric motor driven loads.

### (b) Description of the Prior Art

Beside of operatively controlling the bidirectional unequal speed electric motor for speed change, the constant directional variable speed output of conventional bidirectional unequal speed electric motor driving system is usually required to be accomplished by a CVT or shift-change methods, therefore the structure is complicated with high cost but poor transmission efficiency.

### SUMMARY OF THE INVENTION

The present invention discloses that the output end of the bidirectional unequal speed electric motor being particularly used to provide bidirectional rotating input is transmitted to the input end of the bidirectional same or different speed change ratio constant directional output transmission device, and is through the output end of the bidirectional same or different speed change ratio constant directional output transmission device to further provide constant directional rotating output for driving the rotating load, wherein the user is through operatively controlling the operating direction of the bidirectional unequal speed electric motor to change the driving input direction thereby allowing the bidirectional same or different speed change ratio constant directional output transmission device having different speed change ratio to provide same or different speed change ratio constant directional rotating output while in different driving input direction and rotating speed.

### BRIEF DESCRIPTION OF THE DRAWINGS

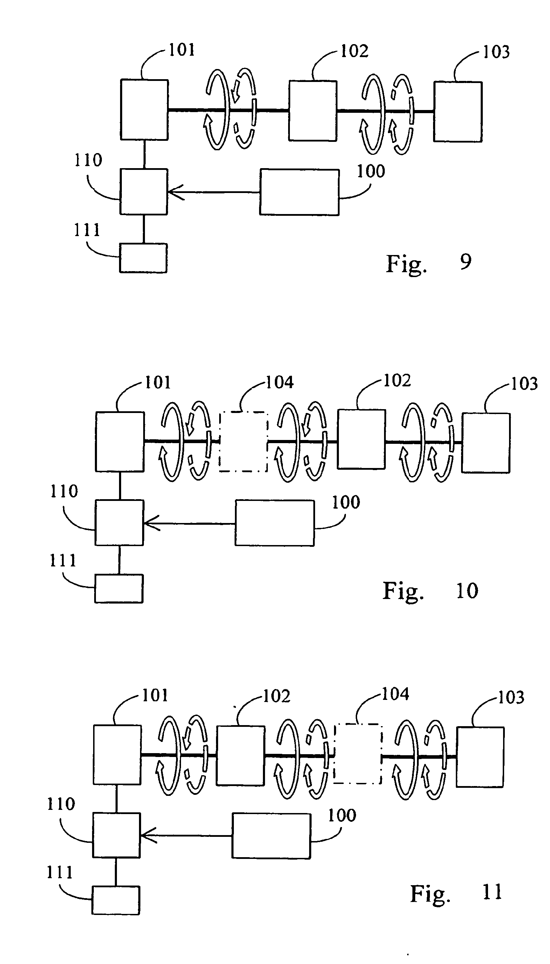

Fig. 9 is a block schematic view of basic structure of the bidirectional unequal speed electric motor driven constant directional output system of the present invention.
Fig. 10 is a block schematic view showing the driving system application example of Fig 1, wherein a transmission device (104) is additionally installed between the bidirectional unequal speed electric motor (101) and the constant directional same or different speed change ratio output transmission device (102).
Fig. 11 is a block schematic view showing the driving system application example of Fig 9, wherein a transmission device (104) is additionally installed between the constant directional same or different speed change ratio output transmission device(102) and the driven rotating load(103).

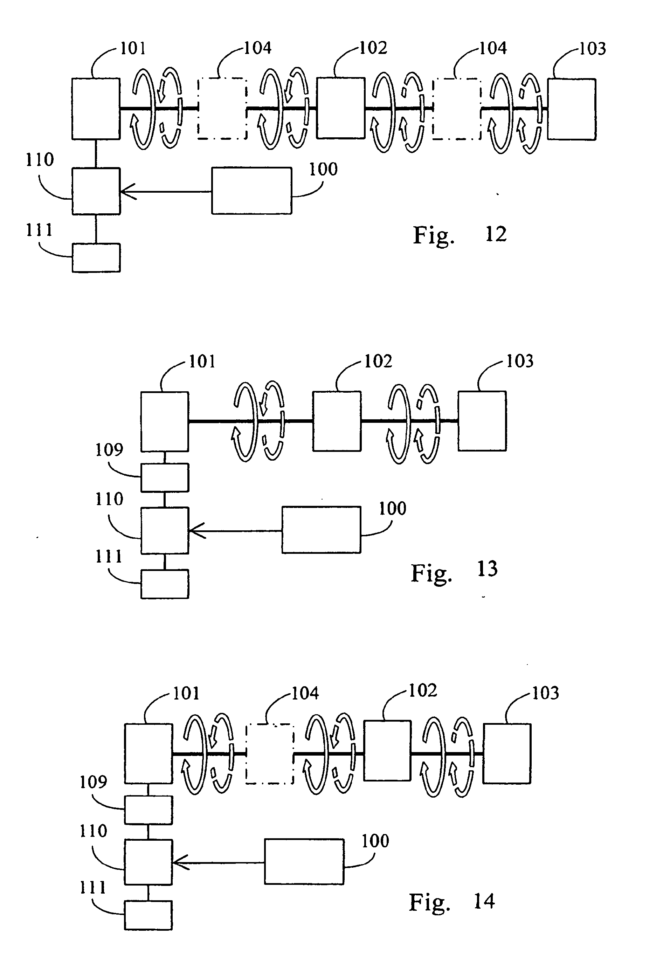

Fig. 12 is a block schematic view showing the driving system application example of Fig 9, wherein a transmission device (104) is respectively additionally installed between the bidirectional unequal speed electric motor (101) and the constant directional same or different speed change ratio output transmission device(102) as well as between the constant directional same or different speed change ratio output transmission device (102) and the driven rotating load (103).
Fig. 13 is a block schematic view showing the bidirectional unequal speed electric motor driven constant directional output system of the present invention is installed with the bidirectional unequal speed electric motor loading current detecting device.
Fig. 14 is a block schematic view showing the driving system application example of Fig 13, wherein a transmission device (104) is additionally installed between the bidirectional unequal speed electric motor (101) and the constant directional same or different speed change ratio output transmission device (102).

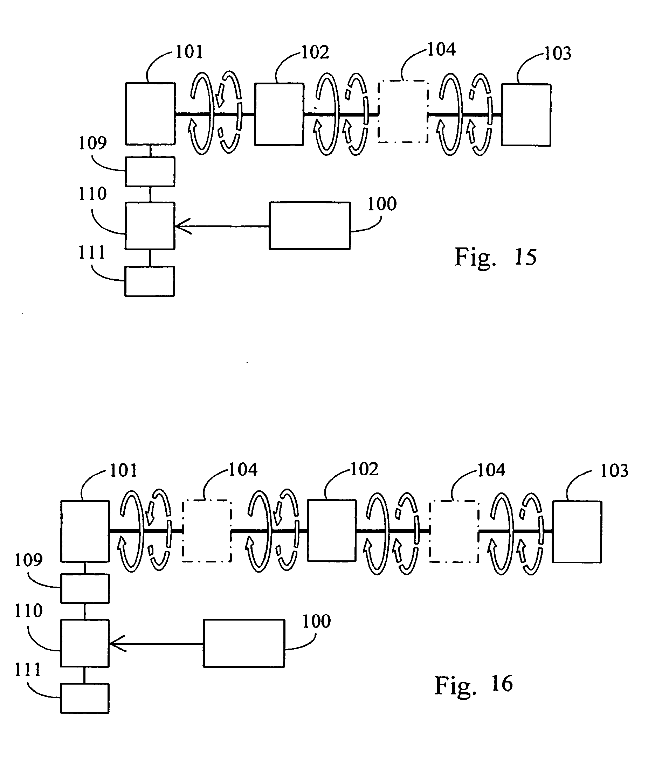

Fig. 15 is a block schematic view showing the driving system application example of Fig 13, wherein a transmission device(104) is additionally installed between the constant directional same or different speed change ratio output transmission device(102) and the driven rotating load (103).
Fig. 16 is a block schematic view showing the driving system application example of Fig 13, wherein a transmission device (104) is respectively additionally installed between the bidirectional unequal speed electric motor (101) and the constant directional same or different speed change ratio output transmission device (102) as well as between constant directional same or different speed change ratio output transmission device (102) and the driven rotating load (103).

### DESCRIPTION OF MAIN COMPONENT SYMBOLS

- 100:: Power supply device
- 101:: Bidirectional unequal speed electric motor
- 102:: Bidirectional same or different speed change ratio constant directional output transmission device
- 103:: Rotating load
- 104:: Transmission device
- 109:: Bidirectional unequal speed electric motor load current detecting device
- 110:: Bidirectional unequal speed electric motor operative control device
- 111:: Input device

### DETAILED DESCRIPTION OF THE PREFERRED EMBODIMENTS

The present invention is through the driving bidirectional positive or reverse rotation of the bidirectional unequal speed electric motor to drive the input end of bidirectional same or different speed change ratio constant directional output transmission device and it is further through the output end of the bidirectional same or different speed change ratio constant directional output transmission device to further operate different speed change ratio constant directional rotating output for driving the rotating load while accepting different driving input direction and different rotating speed input from the bidirectional unequal speed electric motor, wherein the present invention can be applied in the bidirectional unequal speed electric motor driven carriers such as electric bicycles, electric motorcycles, or electric vehicles, or electric industrial machineries, tool machineries, or various electric tools or other electric motor driven loads.

Fig. 9 is a block schematic view of basic structure of the bidirectional unequal speed electric motor driven constant directional output system of the present invention.

Fig. 10 is a block schematic view showing the driving system application example of Fig 9, wherein a transmission device (104) is additionally installed between the bidirectional unequal speed electric motor (101) and the constant directional same or different speed change ratio output transmission device (102).

Fig. 11 is a block schematic view showing the driving system application example of Fig 9, wherein a transmission device (104) is additionally installed between the constant directional same or different speed change ratio output transmission device (102) and the driven rotating load (103).

Fig. 12 is a block schematic view showing the driving system application example of Fig 9, wherein a transmission device (104) is respectively additionally installed between the bidirectional unequal speed electric motor (101) and the constant directional same or different speed change ratio output transmission device (102) as well as between the constant directional same or different speed change ratio output transmission device (102) and the driven rotating load (103).

As shown in Figs 9, 10, 11 and 12, the bidirectional unequal speed electric motor driven constant directional output system is through the operating signals or instructions sent by the input device (111) to allow the power of power supply device (100) via the bidirectional unequal speed electric motor operative control device (110) to operate the bidirectional unequal speed electric motor (101) for first driving rotating directional operation or the second different driving rotating directional operation, wherein the output rotating power from the output end of the bidirectional unequal speed electric motor (101) is transmitted to the input end of the constant directional same or different speed change ratio output transmission device (102) directly or via the transmission device (104), thereby allowing the bidirectional same or different speed change ratio constant directional output transmission device having different speed change ratio to provide constant directional different speed change ratio rotating output power while in different driving input direction for driving the rotating load (103) as shown in Figs 9-12, wherein:

The bidirectional unequal speed electric motor (101): It is constituted by various AC or DC, brushed or brushless, synchronous or asynchronous electric driven bidirectional unequal speed electric motor for unequal positive or reverse rotations;

The bidirectional unequal speed electric motor operative control device (110): It is constituted by electromechanical components or devices, or solid state electronic components or devices, or control circuits having a microprocessor and relevant software for receiving the input from an AC or DC power source of city power or a generator, or the power of power supply device (100) such as fuel cells, primary batteries, or storage/discharge secondary batteries for turning on and off, and operating control the rotating direction, rotating speed and torque, as well as providing over-voltage, or over-current protection for the bidirectional unequal speed electric motor (101);

The input device (111): It sends out signals or instructions to the bidirectional unequal speed electric motor operative control device (110) for turning on and off, operative controlling or setting the rotating direction, rotating speed and toque of the bidirectional unequal speed electric motor (101);

The input power of the first driving rotating direction and the second driving rotating direction of the bidirectional unequal speed electric motor (101) is used for driving the input end of the constant directional same or different speed change ratio output transmission device (102), wherein the rotating speeds of the first rotating direction and the second rotating direction are different;

The first driving rotating direction and second driving rotating direction are contrary to each other;

The constant directional same or different speed change ratio output transmission device (102): The constant directional same or different speed change ratio output transmission device (102) is through receiving the rotating power of different rotating direction and different rotating speed from the bidirectional unequal speed electric motor (101) directly or via the transmission device (104) to output the constant directional rotating directional power; the internal transmission components of the constant directional same or different speed change ratio output transmission device (102) are constituted by one or more than one transmission components of the following: 1) gear train; or 2) friction wheel train; or 3) chain and sprocket train; or 4) belt and pulley train; or 5) transmission crankshaft or wheel train; or 6)fluid transmission device; or 7) electromagnetic transmission device; wherein the speed ratio of input end to the constant directional rotating output end of the constant directional same or different speed change ratio output transmission device (102) while being driven for the different rotating direction, i.e. first driving rotating directional operation and second driving rotating directional operation, can be the same or different, or the variable speed change ratio;

The rotating load (103): It is the rotating load being constantly unidirectionally driven by the output end of the constant directional same or different speed change ratio output transmission device (102) directly or via the transmission device (104).

The bidirectional unequal speed electric motor driven constant directional output system is further installed with the transmission device (104) on at least one of the following locations thereof: 1) the transmission device (104) is additionally installed between the constant directional same or different speed change ratio output transmission device (102) and the rotating load (103), or 2) the transmission device (104) is additionally installed between the bidirectional unequal speed electric motor (101) and the constant directional same or different speed change ratio output transmission device (102), or 3) the transmission devices (104) are additionally installed between the bidirectional unequal speed electric motor (101) and the constant directional same or different speed change ratio output transmission device (102), as well as between the constant directional same or different speed change ratio output transmission device (102) and the rotating load (103);

The transmission device(104): The transmission device(104) is constituted by one or more than one transmission devices of the following: (1) various gear-type, belt-type, friction-type fixed speed ratio rotating type transmission functioning structure, or (2) the stepped or stepless variable speed device being operated manually, or by the mechanical force, or fluid force, or centrifugal force, or rotating torque or counter-rotating torque, or (3) the transmission device of operatively controllable the relative rotating directional relationships of switching between the input end and the output end, or (4) the clutch device or the single way clutch being operated manually, or by the mechanical force, or electromagnetic force, or fluid force, or centrifugal force, or rotating torque, or counter-rotating torque for connecting transmission or interrupting transmission clutch functioning structure.

Fig. 10 is a block schematic view showing the driving system application example of Fig 9, wherein a transmission device (104) is additionally installed between the bidirectional unequal speed electric motor (101) and the constant directional same or different speed change ratio output transmission device(102).

Fig. 11 is a block schematic view showing the driving system application example of Fig 9, wherein a transmission device (104) is additionally installed between the constant directional same or different speed change ratio output transmission device (102) and the driven rotating load (103).

Fig. 12 is a block schematic view showing the driving system application example of Fig 9, wherein a transmission device(104) is respectively additionally installed between the bidirectional unequal speed electric motor (101) and the constant directional same or different speed change ratio output transmission device (102) as well as between the constant directional same or different speed change ratio output transmission device (102) and the driven rotating load (103).

Aforesaid bidirectional unequal speed electric motor driven constant directional output system is manually operated by the input device (111) to operatively control the rotating direction of the bidirectional unequal speed electric motor (101) through the bidirectional unequal speed electric motor operative control device (110).

Besides, the bidirectional unequal speed electric motor driven constant directional output system is further additionally installed with the bidirectional unequal speed electric motor load current detecting device (109) to automatically switch the output speed ratio according to loading current;

Fig. 13 is a block schematic view showing the driving system application example of Fig 9, wherein the bidirectional unequal speed electric motor driven constant directional output system of the present invention is installed with the bidirectional unequal speed electric motor loading current detecting device.

Fig. 14 is a block schematic view showing the driving system application example of Fig 13, wherein a transmission device (104) is additionally installed between the bidirectional unequal speed electric motor (101) and the constant directional same or different speed change ratio output transmission device (102).

Fig. 15 is a block schematic view showing the driving system application example of Fig 13, wherein a transmission device(104) is additionally installed between the constant directional same or different speed change ratio output transmission device (102) and the driven rotating load (103).

Fig. 16 is a block schematic view showing the driving system application example of Fig 13, wherein a transmission device (104) is respectively additionally installed between the bidirectional unequal speed electric motor (101) and the constant directional same or different speed change ratio output transmission device (102) as well as between the constant directional same or different speed change ratio output transmission device (102) and the driven rotating load (103).

As shown in aforesaid Figs 13-16, the bidirectional unequal speed electric motor driven constant directional output system is further installed with the bidirectional unequal speed electric motor load current detecting device (109), wherein the bidirectional unequal speed electric motor load current detecting device(109) is constituted by the various reduced voltage type current detecting device, or electromagnetic inducting current detecting device, or magnetic detection type current detecting device, or heat accumulation type current detecting device to detect loading current of the bidirectional unequal speed electric motor (101) for feedback to the bidirectional unequal speed electric motor operative control device (110), when the state of the loading current of the bidirectional unequal speed electric motor exceeding the predetermined value, and the state exceeding the predetermined time, the signal of the bidirectional unequal speed electric motor load current detecting device(109) is transmitted to the input device (111) or the bidirectional unequal speed electric motor operative control device (110) for changing the rotating direction of the bidirectional unequal speed electric motor (101) to further change the speed change ration of the constant directional same or different speed change ratio output transmission device(102) thereby relatively increasing the speed reduction ratio so as to increase the output torque in the same rotating directional output to drive the load;

When the loading current of the bidirectional unequal speed electric motor (101) is returned to below the predetermined value, it can be operatively controlled to return to the original status by at least one of the two methods in the following:
(1) The bidirectional unequal speed electric motor operative control device (110) is manually operatively controlled by the input device (111) to recover the bidirectional unequal speed electric motor (101) back to original rotating direction and drive the load at original speed ratio;
(2) When the current detected by the bidirectional unequal speed electric motor load current detecting device (109) drops below the predetermined value, it is through the bidirectional unequal speed electric motor operative control device (110) to automatically select the load driving rotating speed at that time and relative to the speed ratio variation thereby to provide the load with the relative output power value of driving smoothly without disruption or sudden unexpected acceleration for driving the bidirectional unequal speed electric motor (101) smoothly back to the original rotating direction operation;

The bidirectional unequal speed electric motor driven constant directional output system is further driven in different driving directions, wherein the rotating output direction switching is achieved by allowing one of the transmission devices (104) to be constituted by the transmission device having the output rotating direction and speed change ratio mechanical switching function.

For practical application of the bidirectional unequal speed electric motor driven constant directional output system, each relevant device in aforesaid embodiments of the bidirectional unequal speed electric motor driven constant directional output system is first individually independent and then transmissionly connected, or two or more than two of the relevant devices are integrally combined.

A bidirectional unequal speed electric motor driven constant directional output system of the present invention discloses that an output end of a bidirectional unequal speed electric motor is particularly used to provide bidirectional rotating input is transmitted to the input end of the bidirectional same or different speed change ratio constant directional output transmission device, and is through the output end of the bidirectional same or different speed change ratio constant directional output transmission device to further provide constant directional rotating output for driving the rotating load, wherein the user is through operatively controlling the operating direction of the bidirectional unequal speed electric motor to change the driving input direction thereby allowing the bidirectional same or different speed change ratio constant directional output transmission device having different speed change ratio to provide same or different speed change ratio constant directional rotating output while in different driving input direction and rotating speed.

The bidirectional unequal speed electric motor driven constant directional output system may be through the operating signals or instructions sent by the input device (111) to allow the power of power supply device (100) via the bidirectional unequal speed electric motor operative control device (110) to operate the bidirectional unequal speed electric motor (101) for first driving rotating directional operation or the second different driving rotating directional operation, wherein the output rotating power from the output end of the bidirectional unequal speed electric motor (101) is transmitted to the input end of the constant directional same or different speed change ratio output transmission device (102) directly or via the transmission device (104), thereby allowing the bidirectional same or different speed change ratio constant directional output transmission device having different speed change ratio to provide constant directional different speed change ratio rotating output power while in different driving input direction for driving the rotating load (103).

The bidirectional unequal speed electric motor (101) may be constituted by various AC or DC, brushed or brushless, synchronous or asynchronous electric driven bidirectional unequal speed electric motor for unequal positive or reverse rotations.

The bidirectional unequal speed electric motor operative control device (110) may be constituted by electromechanical components or devices, or solid state electronic components or devices, or control circuits having a microprocessor and relevant software for receiving the input from an AC or DC power source of city power or a generator, or the power of power supply device (100) such as fuel cells, primary batteries, or storage/discharge secondary batteries for turning on and off, and operating control the rotating direction, rotating speed and torque, as well as providing over-voltage, or over-current protection for the bidirectional unequal speed electric motor (101).

The input device (111) may send out signals or instructions to the bidirectional unequal speed electric motor operative control device (110) for turning on and off, operative controlling or setting the rotating direction, rotating speed and toque of the bidirectional unequal speed electric motor (101).

The input power of the first driving rotating direction and the second driving rotating direction of the bidirectional unequal speed electric motor (101) may be used for driving the input end of the constant directional same or different speed change ratio output transmission device (102), wherein the rotating speeds of the first rotating direction and the second rotating direction are different.

The first driving rotating direction and second driving rotating direction may be contrary to each other.

The constant directional same or different speed change ratio output transmission device (102) may be through receiving the rotating power of different rotating direction and different rotating speed from the bidirectional unequal speed electric motor (101) directly or via the transmission device (104) to output the constant directional rotating directional power; the internal transmission components of the constant directional same or different speed change ratio output transmission device (102) are constituted by one or more than one transmission components of the following: 1) gear train; or 2) friction wheel train; or 3) chain and sprocket train; or 4) belt and pulley train; or 5) transmission crankshaft or wheel train; or 6) fluid transmission device; or 7) electromagnetic transmission device; wherein the speed ratio of input end to the constant directional rotating output end of the constant directional same or different speed change ratio output transmission device (102) while being driven for the different rotating direction, i.e. first driving rotating directional operation and second driving rotating directional operation, can be the same or different, or the variable speed change ratio;

The rotating load (103) may be the rotating load being constantly unidirectionally driven by the output end of the constant directional same or different speed change ratio output transmission device (102) directly or via the transmission device (104).

Each device hereinbefore described may be first individually independent and then transmissionly connected, or two or more of the relevant devices are integrally combined.

The electric motor (101) may be an AC or DC electric motor, or brushed or brushless, synchronous or asynchronous, capable of rotating in a forward or reverse direction.

The control device (110) may be constituted by electromechanical components or devices, solid state electronic components or devices, control circuits having a microprocessor and relevant software for receiving an input from an AC or DC mains power source, a generator, a power supply device (100) such as fuel cells, primary batteries, or storage/discharge secondary batteries for turning on and or off, and capable of controlling the rotational direction, rotational speed and torque, as well as providing over-voltage, or over-current protection for the electric motor (101),

The input device (111) may be capable of sending signals or instructions to the control device (110) for turning the motor on and off, and for controlling or setting the rotational direction, rotational speed and torque of the electric motor (101).

The input power of the first driving rotational direction and the second driving rotational direction of the electric motor (101) may be used for driving the input end of the constant directional output transmission device (102), and wherein the rotational speeds of the first rotating direction and the second rotating direction are different.

The first driving rotational directional and second driving rotational direction may be opposite to one another.

The load (103) may be constantly unidirectionally driven by the output end of the constant directional output transmission device (102), directly, or via the transmission device (104).

## Claims

1. An electric motor drive system with a bi-directional input and a constant directional output, the system comprising:
an electric motor (101) capable of bi-directional, variable-speed rotation, in a forwards direction or in a reverse direction;
a control device (110) for controlling the rotational direction and rotational speed of the electric motor;
a constant directional output transmission device (102) in drivable engagement with the output of the electric motor; and
a load (103) in drivable engagement with the output end of the constant directional output transmission device; and
a transmission device (104) between 1) the constant directional output transmission device (102) and the load (103), or 2) between the electric motor (101) and the constant directional output transmission device (102), or 3) between the electric motor (101) and the constant directional output transmission device (102) as well as between the constant directional output transmission device (102) and the load (103),
wherein the constant directional output transmission device (102) is such as to accept the variable rotational speed and direction output from the electric motor (101) and provide a constant directional rotational output at a variable or constant speed ratio; and
wherein the rotational speed of the output from the constant directional output transmission device (102) is capable of being different to the rotational speed of the input from the electric motor (101).

2. A system as claimed in claim 1, further comprising an input device (111) for issuing control signals to the control device (110) for operatively controlling or setting the on/off, the rotational direction, the rotational speed, and/or the torque to the electric motor (101).

3. A system as claimed in claim 1 or claim 2, further comprising a power supply device (100) for supplying power to the electric motor (101) via the control device (110).

4. A system as claimed in any one of claims 1 to 3, wherein the transmission device (104) is constituted by one or more than one transmission devices of the following: 1) a gear-type, a belt-type, a friction-type fixed speed ratio rotating type transmission functioning structure, or 2) a stepped or stepless variable speed device operated manually, or by a mechanical force, a fluid force or a centrifugal force, or by a rotating torque or a counter-rotating torque, or 3) the transmission device has the capability for operatively controlling the switching relationship of the relative rotating directions at the input end and output end, or 4) a clutch device or a single way clutch operated manually, or by a mechanical force, an electromagnetic force, a fluid force, a centrifugal force, a rotating torque, or a counter-rotating torque for connecting transmission or interrupting transmission clutch functioning structure.

5. A system as claimed in any one of claims 1 to 4, further comprising an electric motor load current detection device (109), which can be a buck/step-down type current detection device, a reduced voltage type current detecting device, an electromagnetic effect induction type current detection device, a magnetic detecting type current detection device, or a heat accumulated type current detection device for detecting load current of the electric motor (101), thereby to provide feedback to the control device (110); wherein, when the load current of the electric motor exceeds a predetermined value and the status exceeds a preset time, the signals from the electric motor load current detection device (109) are transmitted to the input device (111) or to the control device (110) so as to change the rotational direction of the electric motor (101), and further to change the speed ratio of the constant directional output transmission device (102) to a relatively larger ratio to increase the output in the same rotational direction of the output rotational torque further to drive the load.

6. A system as claimed in claim 5, wherein, when the load current of the electric motor (101) returns and drops below the predetermined value, by manual control of the input device (111), the control device (110) can be operatively controlled to enable the electric motor (101) to return to the original rotational direction, thereby driving the load at the original speed ratio.

7. A system as claimed in claim 5, wherein, when the load current of the electric motor (101) returns and drops below the predetermined value, by means of the electric motor operative control device (110), the electric motor load current detection device (109) detects current dropping to the predetermined value thereby automatically selecting the rotational speed which is not only capable of driving the load at that time, but also capable of outputting corresponding power according to the variation of the speed ratio so as to drive the load fluently without pauses or unexpected accelerations, thereby to drive the electric motor (101) fluently in the original rotational direction.

8. A system as claimed in any one of the preceding claims, wherein the electric motor is capable of being driven in different driving directions, wherein switching of the rotational output direction is achieved by allowing one of the transmission devices (104) to be constituted by a transmission device having an output rotational direction and speed change ratio mechanical switching function.

9. A system as claimed in any one of claims 1 to 8, wherein, when it is further required to perform constant directional output in different driving directions, this can be achieved by means of the control device (110) operatively controlling the initial driving direction of the electric motor (101).

10. A system as claimed in any one of claims I to 9, wherein, when it is further required to perform constant directional output in different driving directions, this can be achieved by additionally installing a motor direction switch for manually switching the initial rotational direction of the motor.

11. A system as claimed in any one of claims 1 to 10, wherein, when it is further required to perform constant directional output in different driving directions, this can be achieved by the transmission device (104) being constituted by a transmission device having functions of mechanically switching the rotational direction of the output, and of changing the speed ratio for switching the rotational direction of output.

12. A system as claimed in any one of claims 1 to 11, wherein the control device (110) is constituted by dynamo-electric components or devices, or by solid state electronic components or devices, or by control circuits having a microprocessor and associate operative software for inputting AC or DC power from a utility power source or a generator, or by inputting electric power from a power supply device (100) such as a fuel battery, a primary battery, or a charge/discharge secondary battery, thereby operatively to control the on/off, the rotational direction, the rotational speed, or the torque to the electric motor (101), or to provide over-voltage or over-current protection to the electric motor (101).

13. A system as claimed in any one of claims 1 to 12, wherein the constant directional output transmission device (102) is such as it directly receives, or indirectly receives via the transmission device (104), kinetic energy in different rotational directions from the electric motor (101), so as to provide a kinetic energy output in a constant rotational direction; wherein the internal transmission components of the constant directional output transmission device (102) are constituted by one or more transmission components such as 1) a gear train; or 2) a friction wheel train; or 3) a chain-and-sprocket train; or 4) a belt and a belt wheel train; or 5) a transmission crankshaft and wheel train; or 6) a fluid transmission device; or 7) an electromagnetic transmission device; wherein, if the constant directional output transmission device (102) is driven by the inputs of the first driven rotational direction and of the second driven rotational direction in different rotational directions, the speed ratio of the constant directional rotation between the one at the input end and the one at the output end is the same, is different or has a variable speed ratio.

14. A system as claimed in any one of claims 1 to 13, wherein the load (103) is a wheel train type load directly driven by the constant directional output transmission device (102) or driven in a single constant directional rotation via the transmission device (104).

## Patentansprüche

1. Antriebssystem mit bidirektionalem Eingang und konstantdirektionalem Ausgang, das aufweist:
einen Elektromotor (101), der bidirektional mit variabler Drehzahl in einer Vor- oder einer Rückwärtsrichtung drehen kann;
eine Steuereinrichtung (110) zum Steuern der Drehrichtung und Drehzahl des Elektromotors;
eine konstantdirektionale Ausgangsübertragungseinrichtung (102) in treibender Verbindung mit dem Ausgang des Elektromotors; und
eine Last (103) in treibbarer Verbindung mit dem Ausgang der konstantdirektionalen Ausgangsübertragungseinrichtung; und
eine Übertragungseinrichtung (104) zwischen 1) der konstantdirektionalen Ausgangsübertragungseinrichtung (102) und der Last (103) oder 2) zwischen dem Elektromotor (101) und der konstantdirektionalen Ausgangsübertragungseinrichtung (102) oder 3) zwischen dem Elektromotor (101) und dem konstantdirektionalen Ausgangsübertragungseinrichtung (102) sowie zwischen der konstantdirektionalen Ausgangsübertragungseinrichtung (102) und der Last (103);
wobei die konstantdirektionale Ausgangsübertragungseinrichtung (102) ausgeführt ist, den Ausgang variabler Drehzahl und -richtung des Elektromotors (101) zu übernehmen und einen konstantdirektionalen Rotationsausgang mit variablem oder konstantem Drehzahlverhältnis zu liefern; und
wobei die Drehzahl des Ausgangs der konstantdirektionalen Ausgangsübertragungseinrichtung (102) sich von der Ausgangsdrehzahl des Elektromotors (101) unterscheiden kann.

2. System nach Anspruch 1, weiterhin mit einer Eingabeeinrichtung (111) zur Abgabe von Steuersignalen an die Steuereinrichtung (110) zur betrieblichen Vorgabe des Ein/Aus-Zustands, der Drehrichtung, der Drehzahl und/oder des Drehmoments an den Elektromotor.

3. System nach Anspruch 1 oder 2, weiterhin mit einer Stromversorgung (100) zum Speisen des Elektromotors (101) mit Strom über die Steuerung (110).

4. System nach einem der Ansprüche 1 bis 3, bei dem die Übertragungseinrichtung (104) aus einer oder mehr der folgenden Übertragungseinrichtungen besteht: 1) einer rotierenden Struktur des Zahnrad-, Riemen- oder Friktionstyps mit Übertragungsfunktion mit festem Drehzahlverhältnis; oder 2) einer Einrichtung mit schrittweise oder schrittlos variabler Drehzahl, die von Hand oder durch mechanische, Fluid- oder Zentrifugalkraft oder durch ein Dreh- oder Gegendrehmoment betätigt wird; oder die 3) in der Lage ist, die Umschaltbeziehung der Drehrichtungen am Ein- und Ausgang betrieblich zu steuern; oder 4) einer Kupplungseinrichtung oder Einwegkupplung, die von Hand, durch mechanische, elektromagnetische, fluidische oder Zentrifugalkraft oder ein Dreh- oder Gegendrehmoment betätigt wird, um die Verbindung zu der Struktur mit Kupplungsfunktion herzustellen oder zu unterbrechen.

5. System nach einem der Ansprüche 1 bis 4, weiterhin mit einer Einrichtung (109) zum Ermitteln des Laststroms des Elektromotors (110), bei der es sich um einen Zu-/Absetz-Stromdetektor, einen Stromdetektor mit reduzierter Spannung, einen elektromagnetisch arbeitenden Induktions-Stromdetektor, einen magnetisch arbeitenden Stromdetektor oder einen Wärme speichernden Stromdetektor handeln kann, der eine Rückmeldung an die Steuereinrichtung (110) liefert derart, dass, wenn der Laststrom des Elektromotors einen vorbestimmten Wert übersteigt und der Zustand vorgegeben lange andauert, die Signale aus der Laststromermittlungseinrichtung (10) an die Eingabe-oder die Steuerungseinrichtung (111 bzw. 110) übermittelt werden, um die Drehrichtung des Elektromotors (101) zu wechseln und weiterhin das Drehzahlverhältnis der konstantdirektionalen Ausgangsübertragungseinrichtung (102) zu steigern und den gleichgerichteten Ausgang des Ausgangsdrehmoments zum Antrieb der Last weiter zu erhöhen.

6. System nach Anspruch 5, bei dem bei rückkehrendem und unter den vorbestimmten Wert abfallendem Laststrom des Elektromotors (101) die Steuereinrichtung (110) sich durch Handansteuerung der Eingabeeinrichtung (11) betrieblich derart steuern lässt, dass der Elektromotor (101) zur ursprünglichen Drehrichtung zurückkehrt und so die Last mit dem ursprünglichen Drehzahlverhältnis angetrieben wird.

7. System nach Anspruch 5, bei dem bei rückkehrendem und unter den vorbestimmten Wert abfallendem Laststrom des Elektromotors (101) mittels des betrieblichen Steuereinrichtung (110) des Elektromotors dessen Laststromdetektor (109) den Stromabfall unter den vorbestimmten Wert erfasst und selbsttätig die Drehzahl auswählt, mit der nicht nur die momentane Last antreibbar, sondern auch eine der Änderung des Drehzahlverhältnisses entsprechende Leistungsabgabe möglich ist, um die Last stoßfrei ohne Unterbrechung oder unerwartetes Beschleunigen und so den Elektromotor (101) stetig in der ursprünglichen Drehrichtung anzutreiben.

8. System nach einem der vorgehenden Ansprüche, bei dem der Elektromotor in unterschiedlichen Richtungen antreibbar ist und das Umschalten der Drehrichtung des Ausgangs erfolgt, indem man als eine der Übertragungseinrichtungen (104) eine solche verwendet, die eine mechanische Umschaltfunktion für die Ausgangsdrehrichtung und Drehzahländerung aufweist.

9. System nach einem der Ansprüche 1 bis 8, bei dem, wenn weiterhin ein konstantdirektionaler Ausgang in unterschiedlichen Antriebsrichtungen gefordert ist, dies erreichbar ist, indem die Steuereinrichtung (110) betrieblich die anfängliche Antriebsrichtung des Elektromotors (101) steuert.

10. System nach einem der Ansprüche 1 bis 9, bei dem, wenn weiterhin ein konstantdirektionaler Ausgang in unterschiedlichen Antriebsrichtungen gefordert ist, dies erreichbar ist durch zusätzlichen Einbau eines Motorrichtungsumschalters, um die anfängliche Drehrichtung des Motors von Hand umschaltbar zu machen.

11. System nach einem der Ansprüche 1 bis 10, bei dem, wenn weiterhin ein konstantdirektionaler Ausgang in unterschiedlichen Antriebsrichtungen gefordert ist, sich dies erreichen lässt, indem man als Übertragungseinrichtung (104) eine solche anwendet, die Funktionen einer mechanischen Umschaltung der Ausgangsdrehrichtung und einer Änderung des Drehzahlverhältnisses zum Umschalten der Ausgangsdrehrichtung aufweist.

12. System nach einem der Ansprüche 1 bis 11, bei dem zur Einspeisung von Gleich- oder Wechselstrom aus einem Versorgungsnetz, einem Generator oder einer Stromversorgung (100) wie bspw. einer Brennstoffzelle, einer Trockenbatterie oder einem Akkumulator die Steuereinrichtung (110) aus dynamoelektrischen Komponenten oder Bauteilen, elektronischen Festkörper-Komponenten oder -Bauteilen oder aus Steuerungsschaltungen mit einem Mikroprozessor und zugehöriger Betriebs-Software besteht, mittels der der Ein-/Aus-Zustand, die Drehrichtung, die Drehzahl oder das Drehmoment des Elektromotors (101) steuerbar sind oder ein Überspannungs- oder Überstromschutz für diesen erreichbar ist.

13. System nach einem der Ansprüche 1 bis 12, bei dem die konstantdirektionale Ausgangsübertragungseinrichtung (102) kinetische Energie in verschiedenen Drehrichtungen aus dem Elektromotor (101) direkt oder über die Übertragungseinrichtung (104) indirekt übernimmt, um kinetische Ausgangsenergie in einer konstanten Drehrichtung zu liefern, und die konstantdirektionale Ausgangsübertragungseinrichtung (102) intern eines oder mehr der folgenden Übertragungselemente aufweist: 1) ein Zahnradgetriebe, 2) ein Friktionsradgetriebe; 3) ein Kette-Zahnrad-Getriebe, 4) ein Riementrieb, 5) ein Kurbelgetriebe, 6) ein Fluid-Getriebe oder 7) ein elektromagnetisches Getriebe; wobei, wenn die konstantdirektionale Ausgangsübertragungseinrichtung (102) mit den Eingängen der ersten und der zweiten angetriebenen Drehrichtung in unterschiedlicher Richtung angetrieben werden, das Drehzahlverhältnis der konstantdirektionalen Drehung zwischen dem einen am Eingangs- und dem am Ausgangsende das gleiche, unterschiedlich oder veränderlich ist.

14. System nach einem der Ansprüche 1 bis 13, bei dem die Last (103) eine Last in der Art eines Rädersatzes ist, die von der konstantdirektionalen Ausgangsübertragungseinrichtung (102) direkt oder über die Übertragungseinrichtung (104) in einer einzigen konstanten Drehrichtung angetrieben wird.

## Revendications

1. Système de commande de moteur électrique doté d'une entrée bidirectionnelle et d'une sortie directionnelle constante, le système comprenant:
un moteur électrique (101) capable d'effectuer une rotation bidirectionnelle à vitesse variable, dans un sens direct ou dans un sens inverse;
un dispositif de commande (110) pour commander le sens de rotation et la vitesse de rotation du moteur électrique;
un dispositif de transmission de sortie directionnelle constante (102) en engagement de commande avec la sortie du moteur électrique; et
une charge (103) en engagement de commande avec l'extrémité de sortie du dispositif de transmission de sortie directionnelle constante; et
un dispositif de transmission (104) entre 1) le dispositif de transmission de sortie directionnelle constante (102) et la charge (103), ou 2) entre le moteur électrique (101) et le dispositif de transmission de sortie directionnelle constante (102), ou 3) entre le moteur électrique (101) et le dispositif de transmission de sortie directionnelle constante (102) ainsi qu'entre le dispositif de transmission de sortie directionnelle constante (102) et la charge (103),
dans lequel le dispositif de transmission de sortie directionnelle constante (102) est conçu de manière à accepter la sortie de vitesse et de sens de rotation variables du moteur électrique (101) et à générer une sortie de rotation directionnelle constante à un rapport de vitesse variable ou constant, et
dans lequel la vitesse de rotation de la sortie du dispositif de transmission de sortie directionnelle constante (102) peut être différente de la vitesse de rotation de l'entrée issue du moteur électrique (101).

2. Système selon la revendication 1, comprenant en outre un dispositif d'entrée (111) pour délivrer des signaux de commande au dispositif de commande (110) afin de commander ou de régler de façon opérationnelle la marche/l'arrêt, le sens de rotation, la vitesse de rotation et/ou le couple du moteur électrique (101).

3. Système selon la revendication 1 ou la revendication 2, comprenant en outre un dispositif d'alimentation électrique (100) pour fournir de la puissance au moteur électrique (101) par l'intermédiaire du dispositif de commande (110).

4. Système selon l'une quelconque des revendications 1 à 3, dans lequel le dispositif de transmission (104) est constitué par un ou plusieurs dispositif(s) de transmission parmi les suivants: 1) une structure de fonctionnement de transmission du type rotatif à rapport de vitesse fixe, du type à frottement, du type à courroie et du type à engrenage, ou 2) un dispositif à vitesse variable étagé ou continu actionné manuellement, ou par une force mécanique, une force hydraulique ou une force centrifuge, ou par un couple rotatif ou un couple contrarotatif, ou 3) le dispositif de transmission possède la capacité de commander de façon opérationnelle la relation de commutation des sens de rotation relatifs à l'extrémité d'entrée et à l'extrémité de sortie, ou 4) un dispositif d'embrayage ou un embrayage à une voie actionné manuellement ou par une force mécanique, une force électromagnétique, une force hydraulique, une force centrifuge, un couple rotatif ou un couple contrarotatif afin de connecter ou d'interrompre la structure de fonctionnement d'embrayage de transmission.

5. Système selon l'une quelconque des revendications 1 à 4, comprenant en outre un dispositif de détection de courant de charge de moteur électrique (109), qui peut être un dispositif de détection de courant du type abaisseur/réducteur, un dispositif de détection de courant du type à tension réduite, un dispositif de détection de courant du type à induction à effet électromagnétique, un dispositif de détection de courant du type à détection magnétique, ou un dispositif de détection de courant du type à accumulation de chaleur pour détecter un courant de charge du moteur électrique (101), fournissant de ce fait un retour au dispositif de commande (110), dans lequel, lorsque le courant de charge du moteur électrique dépasse une valeur prédéterminée et que le statut excède un temps prédéfini, les signaux émis par le dispositif de détection de courant de charge de moteur électrique (109) sont transmis au dispositif d'entrée (111) ou au dispositif de commande (110) de manière à changer le sens de rotation du moteur électrique (101), et à changer en outre le rapport de vitesse du dispositif de transmission de sortie directionnelle constante (102) pour un rapport relativement plus élevé afin d'augmenter la sortie dans le même sens de rotation du couple rotatif de sortie afin d'augmenter l'entraînement de la charge.

6. Système selon la revendication 5, dans lequel, lorsque le courant de charge du moteur électrique (101) retourne vers et chute en dessous de la valeur prédéterminée, par une commande manuelle du dispositif d'entrée (111), le dispositif de commande (110) peut être commandé de façon opérationnelle pour permettre au moteur électrique (101) de reprendre le sens de rotation original, entraînant de ce fait la charge au rapport de vitesse original.

7. Système selon la revendication 5, dans lequel, lorsque le courant de charge du moteur électrique (101) retourne vers et chute en dessous de la valeur prédéterminée, au moyen du dispositif de commande opérationnelle de moteur électrique (110), le dispositif de détection de courant de charge de moteur électrique (109) détecte un courant qui chute vers la valeur prédéterminée, sélectionnant de ce fait automatiquement la vitesse de rotation qui n'est pas seulement capable d'entraîner la charge à cet instant, mais qui est également capable de générer une puissance correspondante en fonction de la variation du rapport de vitesse de manière à entraîner la charge de façon continue sans interruptions ni accélérations inattendues, entraînant de ce fait le moteur électrique (101) de façon continue dans le sens de rotation original.

8. Système selon l'une quelconque des revendications précédentes, dans lequel le moteur électrique peut être entraîné dans différentes directions d'entraînement, dans lequel la commutation du sens de sortie de rotation est réalisée en permettant à l'un des dispositifs de transmission (104) d'être constitué par un dispositif de transmission qui présente une fonction de commutation mécanique de rapport de changement de vitesse et de sens de rotation de sortie.

9. Système selon l'une quelconque des revendications 1 à 8, dans lequel, lorsqu'il est en outre nécessaire d'exécuter une sortie directionnelle constante dans différentes directions d'entraînement, ceci peut être réalisé au moyen du dispositif de commande (110) qui commande de façon opérationnelle la direction d'entraînement initiale du moteur électrique (101).

10. Système selon l'une quelconque des revendications 1 à 9, dans lequel, lorsqu'il est en outre nécessaire d'exécuter une sortie directionnelle constante dans différentes directions d'entraînement, ceci peut être réalisé en installant en outre un commutateur de direction de moteur qui permet de commuter manuellement le sens de rotation initial du moteur.

11. Système selon l'une quelconque des revendications 1 à 10, dans lequel, lorsqu'il est en outre nécessaire d'exécuter une sortie directionnelle constante dans différentes directions d'entraînement, ceci peut être réalisé par le dispositif de transmission (104) constitué par un dispositif de transmission qui présente des fonctions de commutation mécanique du sens de rotation de la sortie, et de changement du rapport de vitesse afin de commuter le sens de rotation de la sortie.

12. Système selon l'une quelconque des revendications 1 à 11, dans lequel le dispositif de commande (110) est constitué par des composants ou des dispositifs dynamo-électriques, ou par des composants ou des dispositifs électroniques à l'état solide, ou par des circuits de commande comprenant un micro-processeur et un logiciel opérationnel associé pour entrer une puissance de courant alternatif ou de courant continu en provenance d'une source de puissance universel(le)ou d'un générateur, ou en entrant une puissance électrique à partir d'un dispositif d'alimentation électrique (100) tel qu'une pile à combustible, une batterie primaire, ou une batterie secondaire de charge/décharge, afin de commander ainsi de façon opérationnelle la marche/l'arrêt, le sens de rotation, la vitesse de rotation ou le couple du moteur électrique (101), ou de fournir au moteur électrique (101) une protection contre toute surtension ou toute surintensité.

13. Système selon l'une quelconque des revendications 1 à 12, dans lequel le dispositif de transmission de sortie directionnelle constante (102) est conçu de telle sorte qu'il reçoive directement, ou qu'il reçoive indirectement par l'intermédiaire du dispositif de transmission (104), du moteur électrique (101) une énergie cinétique dans différents sens de rotation, de manière à produire une sortie d'énergie cinétique dans un sens de rotation constant; dans lequel les composants de transmission internes du dispositif de transmission de sortie directionnelle constante (102) sont constitués par un ou plusieurs composant(s) de transmission, tel(s) que: 1) un train d'engrenages, ou 2) un train de poulies à frottement, ou 3) un train à chaîne et roues dentées, ou 4) une courroie et un train de poulies à courroie, ou 5) un vilebrequin de transmission et un train de poulies, ou 6) un dispositif de transmission hydraulique, ou 7) un dispositif de transmission électromagnétique; dans lequel, si le dispositif de transmission de sortie directionnelle constante (102) est entraîné par les entrées du premier sens de rotation entraîné et du deuxième sens de rotation entraîné dans différents sens de rotation, le rapport de vitesse de la rotation directionnelle constante entre celui à l'extrémité d'entrée et celui à l'extrémité de sortie est le même, est différent ou présente un rapport de vitesse variable.

14. Système selon l'une quelconque des revendications 1 à 13, dans lequel la charge (103) est une charge du type train de poulies qui est entraînée directement par le dispositif de transmission de sortie directionnelle constante (102) ou est entraînée dans une seule rotation directionnelle constante par l'intermédiaire du dispositif de transmission (104).
